# EUROPEAN PATENT SPECIFICATION

(11) **EP 0 461 551 B1**
(45) Date of publication and mention of the grant of the patent: **05.03.1997**
(21) Application number: 91109325.0
(22) Date of filing: 07.06.1991
(51) Int. Cl.: H04N 7/087

(54) **Television device with processing of teletext signals**
Fernsehvorrichtung mit Verarbeitung von Teletextsignalen
Dispositif de télévision avec traitement de signaux de télétexte

(30) Priority: 15.06.1990 GB 9013434
(43) Date of publication of application: 18.12.1991
(73) Proprietor: FERGUSON LIMITED, Enfield, Middlesex, EN1 1ND (GB)
(72) Inventor: Rowe, John Michael, Sha Ha, Sai Kung (HK)
(74) Representative: Hartnack, Wolfgang, Dipl.-Ing.

(56) References cited:
- DE-A- 3 242 517
- GB-A- 2 126 856
- US-A- 4 202 012
- US-A- 4 481 536
- US-A- 4 620 227
- US-A- 4 667 235
- NEUES AUS DER TECHNIK vol. E2, no. 1, 15 February 1990, WURZBURG DE page 6 , XP000253994 'Verringern von Hf-Interferenz in Videotext-Decodern'

## Description

The present invention relates to television receivers with processing of teletext signals transmitted during a teletext transmission period of several video lines within a vertical blanking period.

A television system may include additional transmission of a digital teletext signal that is transmitted during one or more video lines of the vertical flyback period. The digital teletext signal is decoded in the receiver is decoded for producing additional control signals for the picture tube for teletext display. Such teletext processing circuits may include a sine wave clock oscillator synchronized by the teletext signal. The oscillator produces a substantially sine wave clock signal which is coupled to a synchronizing or triggering input of a logic circuit that processes the teletext signal. The logic circuit produces one or more data synchronizing clock and data signals used for teletext signal processing.

The output signal of the clock oscillator is substantially a sine wave and has substantially no harmonics. Therefore, the output signal may not cause significant interference within the reproduced picture.

The output signals of the logic circuit, however, have very fast transition times, especially in connection with miniaturized circuit elements. That means that these signals include high harmonics of substantial amplitude. The high harmonies tend to cause interferences within the reproduced picture. If, for example, the frequency of the clock oscillator is 55 MHz, than the 10th harmonic within the clock and data signals, that is 550 MHz, lies within the UHF-band.

It may be desirable to avoid the interferences within the reproduced picture due to high harmonics within the clock and data signals produced by the logic circuit.

In accordance with an aspect of the invention, the amplitude of the oscillator output signal that is coupled to the logic circuit is reduced during an interval, within a vertical field period, in which the logic circuit is not required to process teletext data.

The invention is based upon the following consideration. The teletext signal is present only during one or more video lines of the vertical blanking period. It follows that the clock and data signals need not he produced for further processing of the teletext data at any other time, especially during the full vertical forward scan period. Therefore, it is possible to disable the logic circuit outside the interval in which teletext data is processed, herein referred to as the teletext data transmission period, in order to avoid the interference. On the other hand, during the teletext data transmission period, the clock and data signals are needed and do not produce interferences. Interferences are not produced because, during the teletext data transmission period, no picture is produced as a result of vertical flyback and blanking. By switching off the logic circuit outside the teletext data transmission period, the aforementioned interference is avoided in a very simple manner.

In carrying out an aspect of the invention, a switch is provided between an output of the clock oscillator and a trigger input of the logic circuit. The switch couples the oscillator output signal to the trigger input, during the teletext data transmission period, and decouples it from the trigger input at other times. Thus, the switch decouples the oscillator output or triggering signal from the logic circuit during vertical forward scan or trace period so that switching operation does not occur in the logic circuit.

In carrying out another aspect of the invention, instead of decoupling the triggering signal from the logic circuit, the amplitude of the triggering signal is reduced to such an extent that it cannot trigger the logic circuit. This may he achieved by attenuating the substantially sine wave oscillator output signal produced by the clock oscillator.

In carrying out a further aspect of the invention, the clock oscillator is completely disabled, for instance by applying a special gate pulse to an input of the oscillator and, therefore, is prevented from radiating.

Preferably, the interval in which operation of the logic circuit is enabled is made slightly longer than the teletext data transmission period during which the teletext signal is available for processing. This feature is advantageous for taking into account signal transients and signal delays.
FIGURE 1a-1d shows waveforms useful for explaining an aspect of the invention;
FIGURE 2 shows a block diagram of an arrangement, embodying an inventive feature, that includes an oscillator producing an output signal for triggering a logic circuit of a teletext decoder;
FIGURE 3 shows an arrangement, embodying another inventive feature, for reducing an amplitude of an output signal of a clock oscillator that triggers the logic circuit of FIGURE 2; and
FIGURE 4 shows a timing diagram for explaining the operation of the circuit of FIGURE 3.

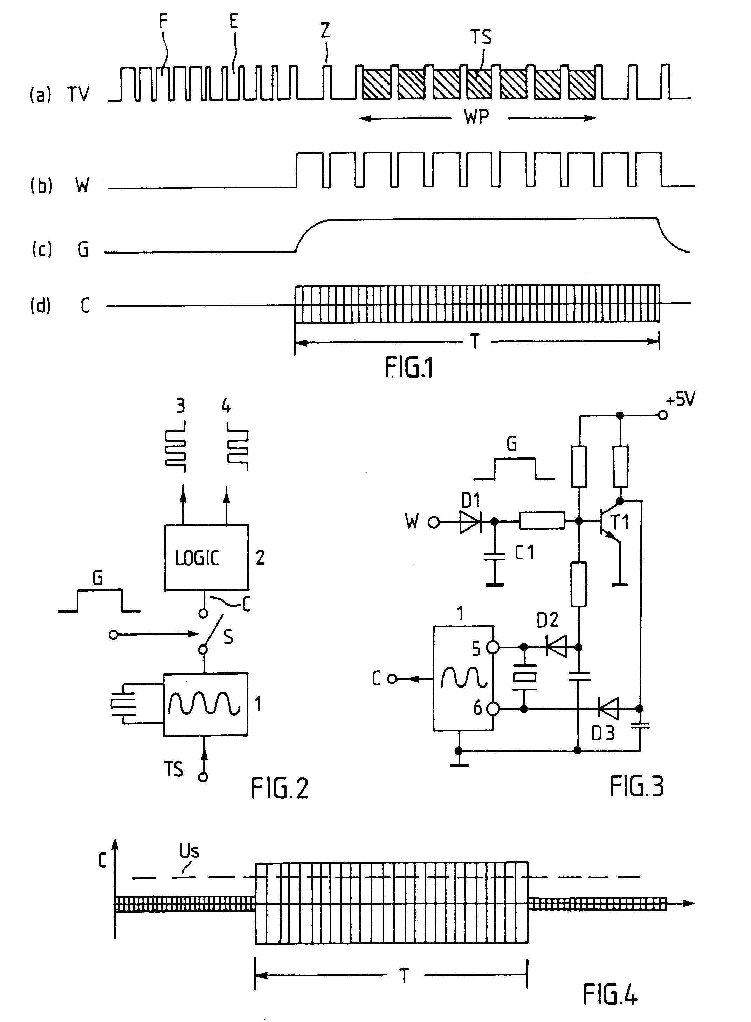

FIGURE 1a shows a waveform of a baseband television signal TV during a vertical flyback period including field synchronizing pulses F, equalizing pulses E and line sync pulses Z. During one or more video lines, forming a teletext data period WP of FIGURE 1a, a digital teletext signal TS is transmitted. A teletext text window signal W of FIGURE 1b is produced by evaluating field sync pulses F of FIGURE 1a and counting the video lines. Window signal W of FIGURE 1b defines a period T of FIGURE 1d that is longer by several video line periods than period WP. From window signal W, a gate pulse G is derived during period T of FIGURE 1c. Gate pulse G of FIGURE 1c is used for enabling normal operation of a clock oscillator that produces a clock signal C of FIGURE 1d. Outside period T, gate pulse G of FIGURE 1c switches off the clock oscillator or, alternatively, reduces an amplitude of its output signal so that logic circuit, not shown in FIGURES 1a-1d, that is synchronized thereby, as explained below, cannot perform switching operation.

FIGURE 2 illustrates a teletext decoder, embodying an aspect of the invention. Similar symbols and numerals in FIGURES 1a-1d and 2 indicate similar items or functions.

In FIGURE 2, an output of a clock oscillator 1 synchronized by teletext signal TS is coupled via a switch S to a synchronizing or trigger input of a logic circuit 2. Logic circuit 2 processes teletext data of signal TS of FIGURE 1a and produces therefrom clock and data signals, 3 and 4, of FIGURE 2 having fast transition times and, therefore, very high harmonics. Switch S is closed by gate pulse G only during period T of FIGURE 1d so that the clock and data signals 3 and 4 of FIGURE 2 are produced during period T of FIGURE 4 for further processing the teletext signal. Outside period T of FIGURE 1d, especially during the complete vertical scan or trace period, switch S is opened. When switch S is opened, clock signal C at the output of clock oscillator 1 is decoupled from the trigger input of logic circuit 2. Therefore, logic circuit 2 cannot perform switching operation. Consequently, clock and data signals 3 and 4 are no longer produced so that interference, caused by the high harmonics, cannot occur during vertical trace, when the picture is reproduced.

FIGURE 3 shows a circuit, embodying another aspect of the invention. Similar symbols and numerals in FIGURES 1a-1d, 2 and 3 indicate similar items or functions. A portion of the circuit of FIGURE 3 is external to oscillator 1 and adapted for reducing the amplitude of clock signal C. Window signal W is rectified by a diode D1 and charges capacitor C1 for producing gate pulse G.

During high level of gate pulse G, a transistor T1 and a diode D2 are turned on; whereas, a diode D3 is turned off. During this time, the operation of the signals at pins 5 and 6, of oscillator 1, does not cause the output signal of oscillator 1 to be attenuated, so that oscillator 1 oscillates at nominal amplitude. Oscillator 1 of FIGURE 3 is implemented by, for example, an integrated circuit SAA5231 of Philips Corporation.

During a low level of gate pulse G, transistor T1 and diode D2 are turned off; whereas, diode D3 is turned on. Now the amplitude of reproduced clock signal C is reduced to such an extent that logic circuit 2 of FIGURE 2 no longer can he triggered.

FIGURE 4 shows the amplitude of clock signal C of FIGURE 3 during period T of FIGURES 1d and 4 and outside period T of FIGURE 4. Similar symbols and numerals in FIGURES 1a-1d, 2, 3 and 4 indicate similar items or functions. A level Us in FIGURE 4 designates a minimum level required to trigger logic circuit 2 of FIGURE 2. During period T of FIGURE 4, clock signal C can trigger logic circuit 2 of FIGURE 2. Outside period T of FIGURE 4, however, clock signal C is smaller than trigger level Us. Therefore, logic circuit 2 of FIGURE 2 cannot be triggered, and, advantageously, does not produce the clock and data signals that could have produced interference.

## Claims

1. A television apparatus responsive to an incoming television signal (S) containing video lines that carry a text data signal (TS) during a vertical blanking period of said television signal wherein switching operations occur during said vertical blanking period for generating an output signal containing information derived from said text data signal, comprising:
text data signal processing means responsive to a periodic, triggering clock signal (C) and to said television signal for processing said text data signal to generate said output signal such that switching operations occur in said text data signal processing means when the amplitude of said clock signal (C) is within a predetermined range of values, the switching operations being disabled when said amplitude of said clock signal is outside said range of values;
means for generating a control signal (G) indicating when the switching operations in said text data signal processing means are required; and
means responsive to said control signal (G) for generating said clock signal (C) with said amplitude being within said range of values during said blanking period and with said amplitude being outside said range of values outside said blanking period.

2. An apparatus according to claim 1 wherein said clock signal generating means (1) comprises a switch (S) for decoupling said clock signal (C) from said text data signal (TS) processing means.

3. An apparatus according to claim 1 wherein said clock signal generating means (1) comprises means for attenuating said clock signal (C).

4. in apparatus according to claim 1 wherein said clock signal generating means comprises an oscillator (1) that ceases oscillating outside said vertical blanking period, for disabling the switching operations.

5. An apparatus according to claim 1 wherein said switching operations occur during an interval that is longer by at least a length of a video line interval than a length of said blanking period required for processing said text data signal (TS) in said text data signal processing means.

6. An apparatus according to claim 1 comprising:
a clock signal oscillator (1) ;
a logic circuit (2) responsive to said clock signal (C) for generating teletext clock and teletext data signals; and
means for reducing the amplitude of said clock signal (C) outside said vertical blanking period to such an extent that said logic circuit (2) is disabled.

7. An apparatus according claim 6 wherein a switch (S) is provided for decoupling said clock signal (2) from an input of said logic circuit (2) during said trace portion.

8. An apparatus according claim 6 wherein said amplitude of said clock signal (C) is reduced to an amplitude that is insufficient to trigger said logic circuit (2) outside said blanking period.

9. An apparatus according claim 6 wherein oscillation in said oscillator (1) ceases outside said blanking period.

## Patentansprüche

1. Fernsehgerät, das auf ein ankommendes Fernsehsignal (S) anspricht, welches Videozeilen enthält, die während einer Vertikal-Austastperiode des Fernsehsignals ein Text-Datensignal tragen, wobei während der Vertikal-Austastperiode Schaltoperationen zur Erzeugung eines Ausgangssignals auftreten, das von dem Text-Datensignal abgeleitete Informationen enthält, umfassend:
Text-Datensignal-Verarbeitungsmittel, die auf ein periodisches Auslösen des Taktsignals (C) und auf das Fernsehsignal ansprechen, um das Text-Datensignal zu verarbeiten, damit das Ausgangssignal so erzeugt wird, daß Schaltoperationen in den Text-Datensignal-Verarbeitungsmitteln auftreten, wenn die Amplitude des Taktsignals (C) innerhalb eines vorgegebenen Bereiches von Werten ist, wobei die Schaltoperationen unwirksam gemacht werden, wenn die Amplitude außerhalb des Bereiches von Werten ist;
Mittel zur Erzeugung eines Steuersignals (G), die anzeigen, wenn die Schaltoperationen in den Text-Datensignal-Verarbeitungsmitteln erforderlich sind; und
auf das Steuersignal (G) ansprechende Mittel, um das Taktsignal mit der innerhalb des Bereiches von Werten liegenden Amplitude während der Austastperiode und mit der außerhalb des Bereiches von Werten liegenden Amplitude außerhalb der Austastperiode zu erzeugen.

2. Gerät nach Anspruch 1, bei dem die das Taktsignal erzeugenden Mittel (1) einen Schalter (S) umfassen, um das Taktsignal (C) von den Text-Datensignal-(TS)-Verarbeitungsmitteln zu entkoppeln.

3. Gerät nach Anspruch 1, bei dem die das Taktsignal erzeugenden Mittel (1) Mittel zur Dämpfung des Taktsignals (C) umfassen.

4. Gerät nach Anspruch 1, bei dem die das Taktsignal erzeugenden Mittel einen Oszillator (1) umfassen, der außerhalb der Vertikal-Austastperiode aufhört zu schwingen, um die Schaltoperationen unwirksam zu machen.

5. Gerät nach Anspruch 1, bei dem die Schaltoperationen während eines Intervalls auftreten, das um wenigstens eine Länge eines Video-Zeilenintervalls länger ist als eine Länge der Austastperiode, die zur Verarbeitung des Text-Datensignals (TS) in den Text-Datensignal-Verarbeitungsmitteln erforderlich ist.

6. Gerät nach Anspruch 1, umfassend:
einen Taktsignal-Oszillator (1);
eine logische Schaltung (2), die auf das Taktsignal (C) anspricht, um Teletext-Takt- und Teletext-Datensignale zu erzeugen; und
Mittel zur Verminderung der Amplitude des Taktsignals (C) außerhalb der Vertikal-Austastperiode in einem solchen Ausmaß, daß die logische Schaltung (2) unwirksam gemacht wird.

7. Gerät nach Anspruch 6, bei dem ein Schalter (S) zur Entkopplung des Taktsignals (C) von einem Eingang der logischen Schaltung (2) während des Hinlaufteils vorgesehen ist.

8. Gerät nach Anspruch 6, bei dem die Amplitude des Taktsignals (C) auf eine Amplitude vermindert wird, die nicht ausreicht, um die logische Schaltung (2) außerhalb der Austastperiode auszulösen.

9. Gerät nach Anspruch 6, bei dem die Schwingung in dem Oszillator (1) außerhalb der Austastperiode aufhört.

## Revendications

1. Téléviseur sensible à un signal de télévision entrant (S) contenant des lignes vidéo qui portent un signal de données de texte (TS) pendant une période de suppression de trame dudit signal de télévision, dans lequel des opérations de commutation ont lieu pendant ladite période de suppression de trame pour générer un signal de sortie contenant de l'information dérivée dudit signal de données de texte, comprenant:
un moyen de traitement de signaux de données de texte sensible à un signal d'horloge périodique de déclenchement (C) et audit signal de télévision pour traiter ledit signal de données de texte afin de générer ledit signal de sortie, de telle sorte que des opérations de commutation aient lieu dans ledit moyen de traitement de signaux de données de texte lorsque l'amplitude dudit signal d'horloge (C) est comprise dans une gamme prédéterminée de valeurs, les opérations de commutation étant invalidées lorsque ladite amplitude dudit signal d'horloge se trouve en dehors de ladite gamme de valeurs;
un moyen pour générer un signal de commande (G) indiquant les moments où les opérations de commutation dans ledit moyen de traitement de signaux de données de texte sont requises; et
un moyen sensible audit signal de commande (G) pour générer ledit signal d'horloge (C) avec ladite amplitude comprise dans ladite gamme de valeurs pendant ladite période de suppression et avec ladite amplitude en dehors de ladite gamme de valeurs en dehors de ladite période de suppression.

2. Appareil suivant la revendication 1, dans lequel ledit moyen (1) générant un signal d'horloge comprend un commutateur (S) pour découpler ledit signal d'horloge (C) dudit moyen de traitement de signaux de données de texte (TS).

3. Appareil suivant la revendication 1, dans lequel ledit moyen (1) générant un signal d'horloge comprend un moyen pour atténuer ledit signal d'horloge (C).

4. Appareil suivant la revendication 1, dans lequel ledit moyen générant un signal d'horloge comprend un oscillateur (1), qui cesse d'osciller en dehors de ladite période de suppression de trame, pour invalider les opérations de commutation.

5. Appareil suivant la revendication 1, dans lequel lesdites opérations de commutation ont lieu pendant un intervalle qui est plus long d'au moins une longueur d'un intervalle de ligne vidéo qu'une longueur de ladite période de suppression requise pour traiter ledit signal de données de texte (TS) dans ledit moyen de traitement de signaux de données de texte.

6. Appareil suivant la revendication 1, comprenant:
un oscillateur de cadencement (1);
un circuit logique (2) sensible audit signal d'horloge (C) pour générer des signaux d'horloge de télétexte et de données de télétexte; et
un moyen pour réduire l'amplitude dudit signal d'horloge (C) en dehors de ladite période de suppression de trame à un point tel que ledit circuit logique (2) soit invalidé.

7. Appareil suivant la revendication 6, dans lequel un commutateur (S) est prévu pour découpler ledit signal d'horloge (C) d'une entrée dudit circuit logique (2) pendant ladite partie de balayage.

8. Appareil suivant la revendication 6, dans lequel ladite amplitude dudit signal d'horloge (C) est réduite à une amplitude qui est insuffisante pour déclencher ledit circuit logique (2) en dehors de ladite période de suppression.

9. Appareil suivant la revendication 6, dans lequel l'oscillation dans ledit oscillateur (1) cesse en dehors de ladite période de suppression.
